# FASCICULE DE BREVET EUROPEEN

(11) **EP 2 632 790 B1**
(45) Date de publication et mention de la délivrance du brevet: **10.12.2014**
(21) Numéro de dépôt: 11785043.8
(22) Date de dépôt: 25.10.2011
(51) Int. Cl.: B63B 27/24, F16L 37/12

(54) **DISPOSITIF DE CONNEXION A MODULES DE SERRAGE LIBERABLES**
VERBINDUNGSVORRICHTUNG MIT ENTSPERRBAREN SPERRMODULEN
CONNECTION MEANS WITH DISENGAGEABLE LOCKING MODULES

(30) Priorité: 26.10.2010 FR 1004201
(43) Date de publication de la demande: 04.09.2013
(73) Titulaire: KSB S.A.S, 92635 Gennevilliers Cedex (FR)
(72) Inventeur: EYQUEM, Sebastien, F-33000 Bordeaux (FR)
(74) Mandataire: Eidelsberg, Victor Albert
(86) Numéro de dépôt international: PCT/FR2011/000572
(87) Numéro de publication internationale: WO 2012/056123

(56) Documents cités:
- WO-A1-2011/026951
- WO-A1-2012/045925
- FR-A1- 2 572 786
- FR-A1- 2 965 559
- GB-A- 1 604 826
- JP-U- H0 266 850
- US-A- 2 199 588
- US-A- 2 825 583
- US-A- 3 445 127
- US-A- 3 586 350
- US-A- 3 642 307

## Description

La présente invention se rapporte aux dispositifs de connexion, notamment mais non exclusivement, utilisés dans le transport du gaz naturel liquéfié (GNL) en offshore (mer ouverte) entre un méthanier et un bâtiment, tel qu'un terminal flottant. L'un des dispositifs de transfert de fluide adapté est constitué d'un flexible cryogénique, porté par le terminal flottant, au bout duquel un connecteur-déconnecteur GNL permet de relier ce dernier au méthanier.

D'une manière générale, un connecteur-déconnecteur GNL (ou coupleur/découpleur GNL) est un dispositif destiné à assurer une liaison rapidement déconnectable entre deux tronçons de canalisation.

Un connecteur-déconnecteur GNL est composé notamment d'un dispositif de connexion-déconnexion de service (appelé communément QC/DC) composé de modules de serrage permettant d'assurer la liaison entre les deux bâtiments, mais également d'un dispositif de déconnexion d'urgence permettant de séparer la canalisation en deux tronçons obturés (appelé communément ERS), composé de deux robinets d'isolement entre lesquels la canalisation peut ainsi être séparée sans perte de fluide par l'ouverture d'un collier (appelé communément ERC).

Ce dispositif ERS, tel que préalablement conçu par les sociétés KSB et Eurodim (brevet EP 1 405 003), est notamment constitué de deux robinets de type papillon pourvus chacun d'un disque monté pivotant à l'intérieur. de l'embout autour d'un axe de pivotement entre une position d'ouverture de la section transversale d'écoulement de fluide et une position de fermeture de cette dernière, et d'un dispositif extérieur de commande du pivotement s'étendant perpendiculairement à l'axe de la canalisation et étant parallèles l'un à l'autre. Un premier robinet à papillon est monté à une première extrémité du premier embout et un deuxième robinet à papillon est monté à l'extrémité du deuxième embout, les faces des deux papillons étant tournées l'une vers l'autre. Ce dispositif, qui présente l'avantage d'être très compact et relativement léger, permet aussi d'avoir une très faible perte de fluide lors d'une déconnexion d'urgence du fait du très faible volume inscrit entre les deux papillons en position fermée. Il se caractérise notamment par le chevauchement des papillons lors de leur manoeuvre et donc par le faible écartement entre les deux arbres de manoeuvre.

Le document US 3,586,350 décrit un dispositif de connexion-déconnexion selon le préambule de la revendication 1, à l'exception de la caractéristique, selon laquelle le dispositif comprend un flexible, auquel le second embout est relié.

Les demandes de brevet français N° 10/01499 et N° 10/01500, publiées après la date de priorité de la présente demande sous les numéros FR2958620 A1 et FR2958712 A1, prévoient d'utiliser cet ERS (sans le collier ERC) dans le cadre d'un connecteur-déconnecteur plus léger et moins encombrant, qui regroupe en une même interface les dispositifs QC/DC et ERS, où ce sont les habituels modules de serrage du QC/DC qui assurent non seulement la connexion-déconnexion de service, mais aussi la déconnexion d'urgence. D'autre part, un troisième robinet à papillon est mis en place dans l'embout côté flexible afin d'assurer une double barrière d'étanchéité à l'extrémité du flexible, obligatoire dans le cadre d'un transfert de GNL.

Cependant, ces modules de serrage étant indépendants, si l'un d'entre eux est défaillant cela peut gêner la séparation entre les deux embouts du connecteur-déconnecteur, ce qui peut se révéler dangereux dans le cadre d'une déconnexion d'urgence. Egalement, il est imposé que le dispositif de déconnexion d'urgence doit se déclencher dans les deux secondes après activation, ce qui est très difficile à atteindre pour un dispositif composé de plusieurs modules de serrage. Le but de la présente invention est donc de pallier ces inconvénients.

L'invention a pour objet un dispositif de connexion-déconnexion, regroupant en une seule interface les fonctions de connexion-déconnexion de service et de déconnexion d'urgence, comprenant un premier embout relié au méthanier et un second embout relié à un flexible, plusieurs modules de serrage, chacun d'entre eux étant monté par un support sur le premier embout et étant agencé pour, dans un mode de service, suivant un premier mouvement ayant une composante de rotation, venir s'appliquer, en fermeture de la connexion, derrière une bride du second embout et s'en écarter en ouverture de la connexion et chaque module étant monté, dans un mode d'urgence, mobile, suivant un deuxième mouvement d'une position de retenue où il peut retenir les embouts l'un contre l'autre, en étant retenu par un dispositif de retenue, à une position de dégagement où il ne le peut plus, caractérisé en ce que le deuxième mouvement est un mouvement de translation à la fois en bloc du module et de son support les écartant de l'axe des embouts de plus en plus dans la direction du second embout.

Suivant l'invention, en ouverture, en mode d'urgence, un module est déplacé d'un seul bloc avec son support, et ce n'est pas seulement une partie de cet ensemble qui est déplacée, cette subdivision en des parties en mouvement nécessitant des actionnements distincts, sources de dysfonctionnement.

Dans le cas d'un transfert de fluide en mer, les efforts transmis par le flexible sur le système de connexion peuvent être très importants.

Au brevet US 3 586 350 (Figure 5), la mâchoire 51 reprend tous les efforts de retenue de la bride 19 par rapport à la bride 17 du corps 15. Dans le cas d'un effort de traction ou d'un moment de flexion, la bride 19 tend à s'écarter de la bride 17, la mâchoire 51 tend à pivoter autour de son axe de pivotement 52 dans le sens anti-horaire. Cela provoque un effort de contact très important entre la face 58 de la mâchoire 51 et le galet 57.

Si une opération de déconnexion d'urgence a lieu, l'alimentation hydraulique du piston 64 entraîne celui-ci vers le haut, ce qui est censé entraîner le pivotement du bras 53 autour de son axe de pivotement 54 dans le sens anti-horaire, et donc libérer la mâchoire 51 en rotation dans le sens anti-horaire autour de son axe de pivotement 52, ce qui permet de libérer la bride 19. Le US 3 586 350, indique que la pression hydraulique fournie au piston 64 sera suffisante pour vaincre les efforts de frottement entre le galet 57 et la face 58 de la mâchoire 51.

Mais :
- comme indiqué précédemment, cet effort de contact peut-être très important, dans le cas d'un transfert par flexible en mer agitée, et avec le temps un phénomène de matage peut se produire entre le galet 57 et la face 58,
- le piston 64 doit en plus vaincre l'effort de compression du ressort 59,
- dans le cas d'un transfert de GNL (Gaz Naturel Liquéfié) à -163°C, une formation de glace peut avoir lieu et bloquer la cinématique.

Ces trois facteurs favorisent grandement le risque de blocage, qui peut empêcher la déconnexion d'urgence d'avoir lieu, ce qui nuit à l'aspect sécuritaire de l'installation qui est bien entendu primordial.

Suivant l'invention :
- les modules de serrage translatent grâce à la coopération de rainures et nervures qui peuvent être positionnées hors du froid (éloignées de la veine fluide),
- l'effort de traction du flexible favorise la déconnexion (alors que dans le brevet US 3 586 350, il s'y oppose).

De préférence, le dispositif de retenue comprend un collier de serrage commun à tous les modules serrant une bride de chaque module sur une bride du premier embout, le deuxième mouvement est généré par le propre poids du flexible, mouvement rendu possible par l'inclinaison importante par rapport à l'horizontale de l'axe du connecteur-déconnecteur, le premier embout étant plus haut que le deuxième embout et les deux embouts se séparant de manière coaxiale. Le collier autorise la translation et le poids du flexible, source de force insusceptible d'être en panne, la provoque.

Dans le brevet US 3 586 350, chaque module de serrage a son propre dispositif d'ouverture de la mâchoire 51 en déconnexion d'urgence, à travers notamment l'alimentation du piston 64, grâce à la pression hydraulique acheminée depuis la pompe par les flexibles hydrauliques 66, 71 et 72.

L'expérience a montré que ce dispositif ne fonctionnait pas correctement. En effet, l'effort que transmet la bride 19 est différent sur chaque module : par exemple dans le cas d'un moment de flexion entre les deux brides, certains modules verront de la traction, d'autres verront de la compression. Ainsi, la pression nécessaire au niveau du piston 64 pour entraîner le bras 53 en rotation sera très différente d'un module à l'autre. Et étant donné qu'ils ont la même source d'alimentation hydraulique, lors d'une ouverture en déconnexion d'urgence, les mâchoires 51 ne s'ouvriront pas en même temps. Par conséquent, la dernière mâchoire à s'ouvrir verra elle seule tous les efforts transmis par la bride 19, ce qui nous ramène au premier défaut, car cela aura d'autant tendance à empêcher son ouverture. Un endommagement de la mâchoire est même très probable sous l'effort de la bride en extrémité de flexible. Et la durée maximale de 2 secondes exigée dans le cadre d'une déconnexion d'urgence a toutes les chances de ne pas être respectée dans ce cas.

Suivant le perfectionnement de l'invention, les modules sont tous libérés en même temps et cela dans un temps très court, sans risque de blocage, ni d'endommagement du matériel.

Par le regroupement des fonctions de service et d'urgence, le connecteur-déconnecteur présentait déjà de nombreux avantages par rapport aux connecteurs-déconnecteurs classiques, comme la réduction de la masse et de l'encombrement, notamment en extrémité de flexible, tout en permettant une unique source d'alimentation hydraulique pour l'ensemble des dispositifs, ainsi que l'assurance d'une deuxième barrière d'étanchéité en bout de flexible non seulement en déconnexion de service mais également après une déconnexion d'urgence grâce à la mise en place d'un troisième robinet à papillon.

Le dispositif suivant la présente invention permet, en déconnexion d'urgence, d'avoir un temps de réponse après activation bien.plus court qu'avec un dispositif composé uniquement de modules de serrage, et identique par rapport aux connecteurs-déconnecteurs classiques, puisqu'il correspond au temps d'ouverture du collier ERC. Et il apporte une sécurité supplémentaire par rapport aux connecteurs-déconnecteurs classiques, qui ne possèdent généralement qu'un seul dispositif (collier ERC) pour réaliser la déconnexion d'urgence. Désormais, même si le fait d'ouvrir le collier de type ERC suffit à assurer la séparation des embouts du connecteur-déconnecteur, il est en effet possible de combiner l'ouverture des modules de serrage et celle du collier de type ERC, ce qui permet d'assurer la déconnexion d'urgence même en cas de défaillance d'un des dispositifs, ce qui est très favorable, notamment lors d'une analyse de risques du système de transfert.

Par ses nombreux avantages, ce connecteur-déconnecteur plus compact et plus sécuritaire peut donc être employé dans le cadre d'un système de transfert par flexible aérien comme par flexible flottant et l'invention vise enfin l'utilisation d'un dispositif de connexion-déconnexion suivant l'invention dans une installation de transfert de fluide par flexible aérien ou flottant entre deux bâtiments, dont l'un de navigation.

De préférence, dans cette application, le dispositif suivant l'invention se caractérise aussi par un premier robinet à papillon monté à l'extrémité du premier embout tournée vers le second embout, un deuxième robinet à papillon monté à l'extrémité du second embout tournée vers le premier embout et un troisième robinet à papillon monté à l'extrémité du second embout éloignée du premier embout.

Aux dessins annexés, donnés uniquement à titre d'exemples :
- la Figure 1: est une vue schématique d'une installation de transfert de gaz naturel liquéfié (GNL) de type "Tandem" par flexible aérien entre un méthanier et un terminal flottant ;
- la Figure 2: est une vue schématique d'une installation de transfert de gaz naturel liquéfié (GNL) par flexible flottant entre un méthanier et un terminal flottant ;
- la Figure 3: est une vue en coupe du connecteur-déconnecteur suivant la présente invention, où les modules de serrage sont en position fermés ;
- la Figure 4: est une vue en coupe du connecteur-déconnecteur, où les modules de serrage sont en position ouverts ;
- la Figure 5: est une vue en coupe du connecteur-déconnecteur après une déconnexion d'urgence ;
- la Figure 6: est une vue en perspective du connecteur-déconnecteur après une déconnexion d'urgence ;
- les Figures 7, 8 et 9: sont des vues en coupe d'un module de serrage suivant son plan de symétrie ;
- la Figure 10: est une vue en coupe suivant la ligne A-A de la Figure 9; et
- la Figure 11: est une vue en coupe suivant la ligne B-B de la Figure 9.

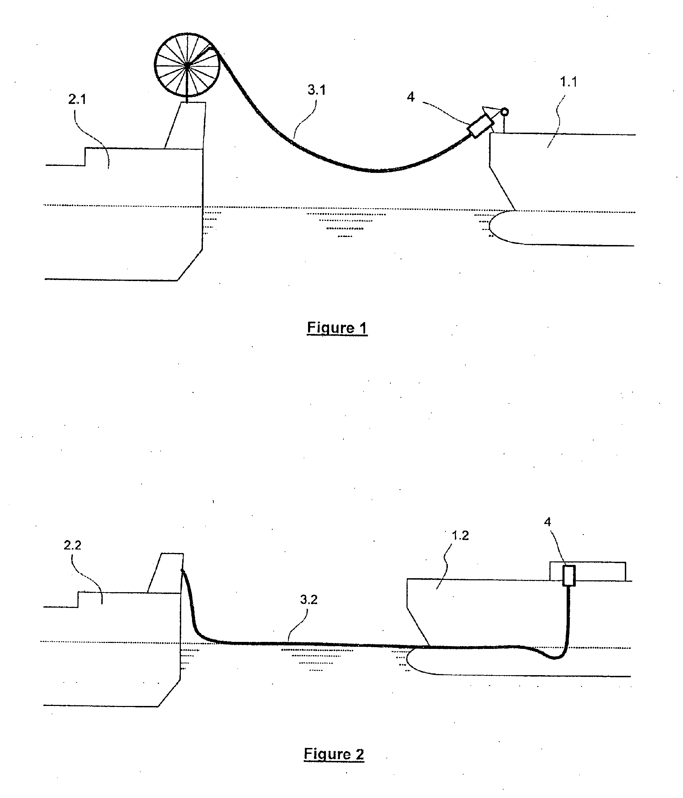

L'invention peut être intégrée notamment dans les installations de transfert de gaz naturel liquéfié (GNL) présentées en Figures 1 et 2.

La Figure 1 représente schématiquement une installation de transfert de gaz naturel liquéfié (GNL) de type "Tandem" (tel que présenté par la société Eurodim dans le brevet FR 2 837 190) entre un méthanier 1.1 et un terminal flottant 2.1, qui peut être de chargement ou de déchargement lui-même relié au réseau gaz par des tuyauteries situées sous la mer, cette installation comprenant notamment une canalisation 3.1 flexible cryogénique aérienne, disposée en caténaire et portée par le terminal flottant 2.1, ainsi que le connecteur-déconnecteur 4 permettant d'assurer la liaison entre le méthanier 1.1 et le flexible cryogénique aérien 3.1.

La Figure 2 représente schématiquement une installation de transfert de gaz naturel liquéfié (GNL), entre un méthanier 1.2 et un terminal flottant 2.2, qui peut être de chargement ou de déchargement lui-même relié au réseau gaz par des tuyauteries situées sous la mer, cette installation comprenant notamment une canalisation 3.2 flexible cryogénique flottante portée par le terminal flottant 2.2, ainsi que le connecteur-déconnecteur 4 permettant d'assurer la liaison entre le méthanier 1.2 et le flexible cryogénique flottant 3.2.

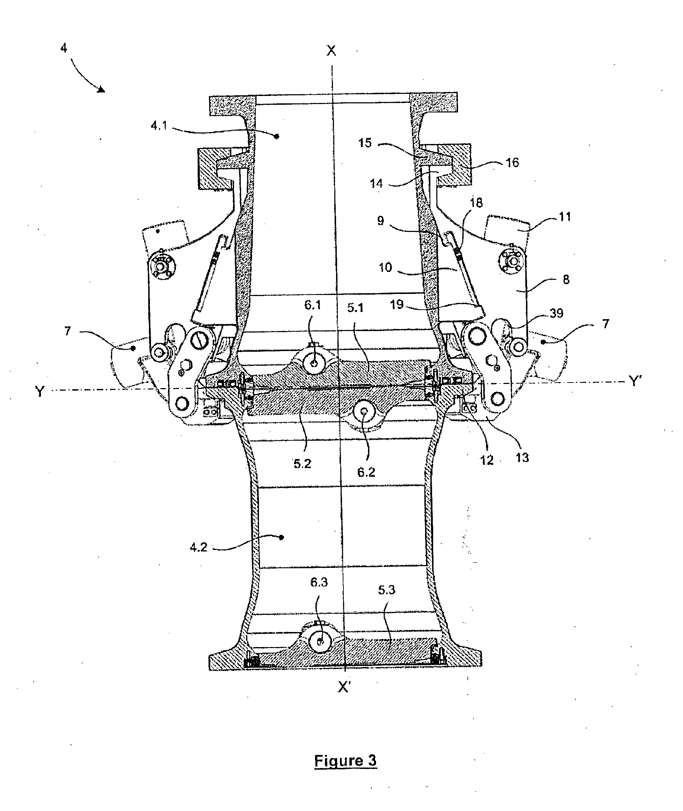

La Figure 3 représente une vue en coupe du connecteur-déconnecteur 4 incorporant la présente invention.

Il est composé de deux embouts 4.1, 4.2, l'embout 4.1 est positionné sur le méthanier 1 en liaison avec le manifold, alors que l'embout 4.2 est fixé à l'extrémité du flexible cryogénique 3. A l'extrémité de chaque embout 4.1, 4.2, au niveau de leur interface, est positionné un robinet à papillon représenté fermé, respectivement 5.1, 5.2, pourvu chacun d'un disque monté pivotant à l'intérieur de l'embout autour d'un axe de pivotement (ou arbre de manoeuvre), respectivement 6.1, 6.2, entre une position d'ouverture de la section transversale d'écoulement de fluide et une position de fermeture de cette dernière, et un dispositif extérieur de commande du pivotement, les axes de pivotement s'étendant perpendiculairement à l'axe (XX') de la canalisation et étant parallèles l'un à l'autre. Les faces des deux papillons 5.1, 5.2 sont tournées l'une vers l'autre. Un troisième robinet à papillon 5.3, positionné à l'autre extrémité de l'embout 4.2 pivotant lui aussi autour de son arbre de manoeuvre 6.3, parallèle aux arbres de manoeuvre 6.1, 6.2, également représenté fermé, permet d'assurer une double barrière d'étanchéité à l'extrémité du flexible cryogénique 3 à la suite d'une déconnexion entre les deux embouts 4.1, 4.2 du connecteur-déconnecteur 4. Un système d'approche et de guidage (non représenté) des deux embouts 4.1, 4.2 permet notamment, lors de la fin d'une manoeuvre de connexion et du début d'une manoeuvre de déconnexion, d'assurer une coaxialité et une orientation angulaire entre les deux embouts 4.1, 4,2 permettant le parfait positionnement de l'un par rapport à l'autre.

Plusieurs modules de serrage 7 identiques, répartis uniformément autour de l'embout 4.1, permettent d'accoupler ou désaccoupler les deux embouts 4.1, 4.2 au niveau de leur interface située dans le plan radial à l'axe de la canalisation passant par (YY'), de manière à relier les canalisations du méthanier 1 avec celles du terminal flottant 2. Chaque module de serrage 7 est entièrement intégré dans un support 8 en "U" pourvu d'une rainure 9 sur ses deux faces latérales, qui lui permettent de coopérer avec des nervures 10 solidaires du premier embout 4.1. Ces nervures 10 sont disposées de manière inclinée par rapport à l'axe de la canalisation (XX'), afin que les modules de serrage 7 (dans le cas où ils ne sont pas verrouillés en position) s'écartent de cet axe (XX') lorsqu'ils se déplacent en translation le long des nervures 10 en direction de l'embout 4.2, jusqu'à ce que la butée 18, solidaire du support 8 en "U" entre en contact avec l'épaulement 19 de la nervure 10.

L'autre extrémité du module de serrage 7 est constituée d'une bride 14, qui coopère avec une bride 15 intégrée sur le corps de l'embout 4.1, de manière à ce qu'elles puissent être serrées par la gorge conique d'un collier 16 de type ERC. Lorsqu'il est fermé, ce collier 16 de type ERC maintient ainsi en position verrouillée sur l'embout 4.1 l'ensemble des modules de serrage 7. Les efforts repris par ces modules de serrage pendant un transfert sont repris au niveau de l'embout 4.1 par le collier 16 de type ERC et par les nervures 10.

Ces modules de serrage 7 sont actionnés par un vérin hydraulique 11, ce qui permet de serrer la bride 12 de l'embout 4.2 contre l'embout 4.1, ou au contraire d'assurer son passage ou sa libération, respectivement dans le cas d'une connexion ou d'une déconnexion. En phase de serrage, le sabot 13 de chaque module de serrage 7 exerce sur la bride 12 de l'embout 4.2 un effort parallèle à l'axe (XX') dirigé vers l'embout 4.1.

A la Figure 3, les modules de serrage 7 sont représentés verrouillés en translation par le collier 16 de type ERC et en position fermés contre la bride 12 de l'embout 4.2.

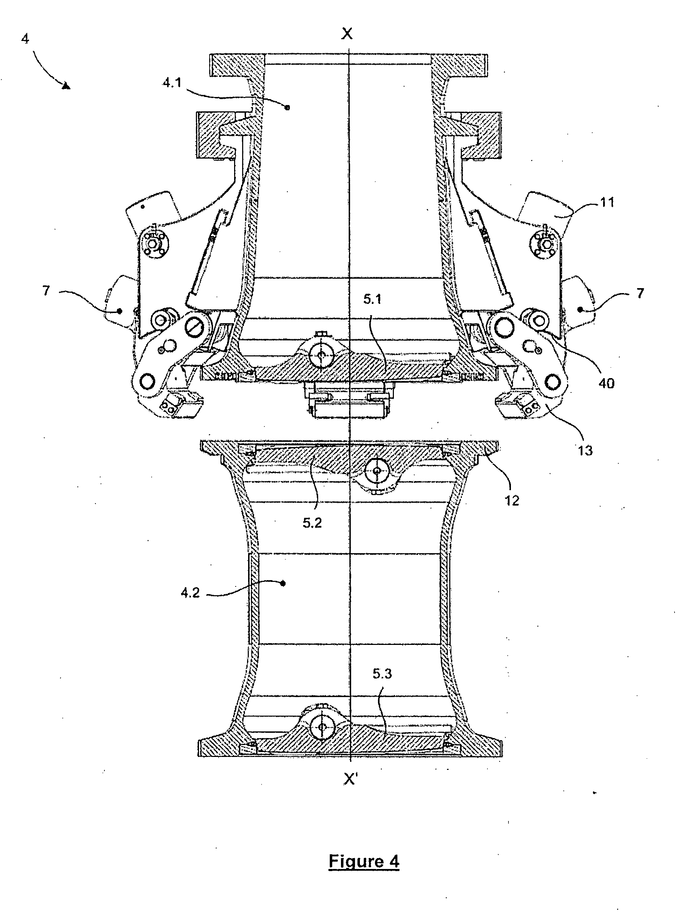

La Figure 4 est une vue en coupe du connecteur-déconnecteur 4 après une rentrée de tige de l'ensemble des vérins 11, qui entraîne l'ouverture de l'ensemble des modules de serrage 7. L'écartement des sabots 13 par rapport à l'axe (XX') de la canalisation permet le libre passage en connexion ou la libération en déconnexion de la bride 12 de l'embout 4.2. Les robinets à papillon 5.1, 5.2, 5.3 sont, dans ce cas de figure, en position fermée.

Lors d'une opération de déconnexion de service, l'embout 4.2 est maintenu au contact de l'embout 4.1 par le câble du treuil de connexion-déconnexion (non représenté) permettant la manoeuvre du flexible. Ce n'est qu'après la complète ouverture de l'ensemble des modules de serrage 7 que le relâchement du câble du treuil de connexion-déconnexion permet l'éloignement de l'embout 4.2 par rapport à l'embout 4.1.

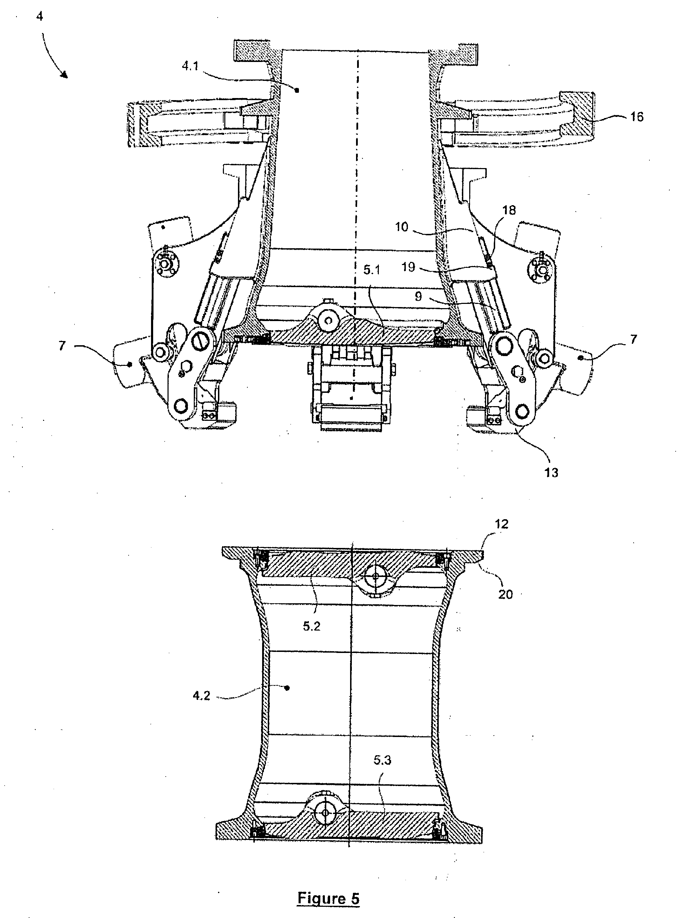

La Figure 5 est une vue en coupe du connecteur-déconnecteur 4 après une déconnexion d'urgence. Une ouverture du collier 16 de type ERC (précédée de la fermeture des robinets à papillon 5.1, 5.2, 5.3) permet la libération des modules de serrage 7 qui peuvent ainsi coulisser le long de leurs nervures inclinées 10 sous l'effet de la poussée de la bride 12 de l'embout 4.2 qui entraîne le déplacement de l'ensemble du module de serrage 7 par l'intermédiaire du sabot 13. Cette poussée de la bride 12 est permise par l'importante inclinaison de connecteur-déconnecteur 4 par rapport à l'horizontale, qui est de surcroît en position verticale dans le cadre d'un transfert par flexible flottant, le flexible cryogénique 3 tombant de son propre poids. L'embout 4.2 se sépare ainsi de l'embout 4.1 de manière coaxiale grâce au système de guidage (non représenté). La bride 12 de l'embout 4.2 est donc en contact avec le sabot 13 de chaque module de serrage 7 jusqu'à ce que le diamètre des sabots 13 au niveau de leur point le plus bas par rapport à l'axe (XX') soit supérieur au diamètre extérieur de la bride 12, qui est pourvue d'un chanfrein 20 facilitant la séparation avec le sabot 13. Une butée 18, entrant en contact avec l'épaulement 19 du corps du premier embout 4.1, vient arrêter les modules de serrage 7 en translation par leurs rainures 9 dans les nervures 10 suite au départ de la bride 12.

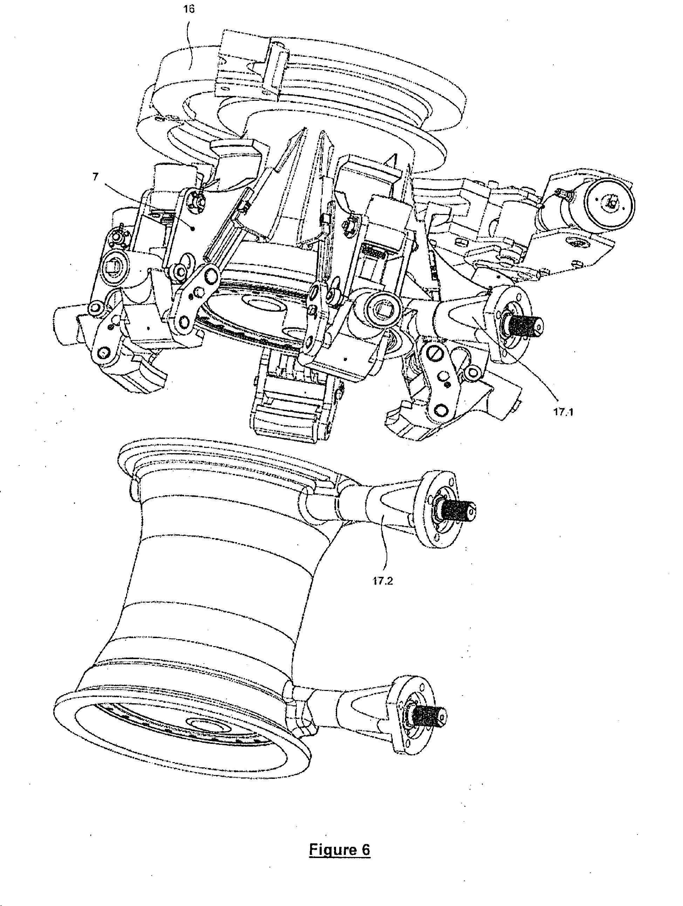

La Figure 6 est une vue en perspective du connecteur-déconnecteur 4 après une déconnexion d'urgence. Le dispositif d'actionnement des robinets à papillon 5.1, 5.2 et 5.3, ainsi que le système de guidage des deux embouts 4.1, 4.2, ne sont pas représentés.

Ainsi, l'ouverture du collier 16 de type ERC permet, grâce au coulissement des modules de serrage 7 en position fermée, de séparer rapidement le connecteur-déconnecteur 4. Il est cependant envisageable, afin de disposer d'une sécurité supplémentaire dans le cas d'une opération de déconnexion d'urgence, de réaliser, en plus de l'ouverture du collier 16 de type ERC, l'ouverture des modules de serrage 7 (comme présentés en Figure 4), ce qui autorise une éventuelle défaillance d'un des deux dispositifs.

Les modules dé serrage 7, au minimum au nombre de trois, sont répartis uniformément autour de l'embout 4.1 et de manière à ne pas interférer avec les cols 17.1, 17.2 des robinets à papillon 5.1, 5.2.

Un vérin 11, en liaison pivot autour de ses tourillons 41 par rapport au support 8 en "U", possède une chape 24 fixée à l'extrémité de son piston 22. Un axe 25 positionné à l'extrémité de la chape 24 permet de réaliser une liaison pivot d'une part avec les deux bielles 28, également en liaison pivot à leur autre extrémité par rapport au support 8 en "U" autour de l'axe 26, et d'autre part avec la bielle centrale 29, également en liaison pivot à son autre extrémité avec le poussoir 30 autour de l'axe 27. Ce poussoir 30, guidé dans l'alésage 37 de la mâchoire 13 ainsi que dans l'alésage 33 du capot 31, vissé à l'intérieur de la mâchoire 13, a un mouvement de translation le long de l'axe (*uu*'), limité vers *u*' par son épaulement 42 et vers *u* par son épaulement 43. Une cartouche à ressorts 32 est positionnée à l'intérieur du capot 31, de manière à ce que la translation du poussoir 30 permette de la comprimer ou de la décomprimer. Deux bielles latérales 35, en liaison pivot en une extrémité avec la mâchoire 13 autour de l'axe 34, et de l'autre extrémité avec le support 8 en "U" autour de l'axe 26, possèdent une butée 38 fixée entre elles, pouvant entrer en contact au niveau de sa face latérale 21 avec le support 8 en "U", au niveau de sa face latérale 46 avec la chape 24, et au niveau de sa face supérieure 23 avec la mâchoire 13. La mâchoire 13 possède en son extrémité deux patins 36 pouvant entrer en contact avec la bride 12 de l'embout 4.2. Lax'e 27 est pourvu, à chacune de ses extrémités, de deux galets, un petit galet 44 entrant en contact avec les courbes 39 ou 40 du support 8 en "U", et un grand galet 45 pouvant entrer en contact avec la face supérieure des bielles latérales 35. Les courbes 39 et 40 du support 8 en "U" peuvent être visualisées aux Figures 3 et 4.

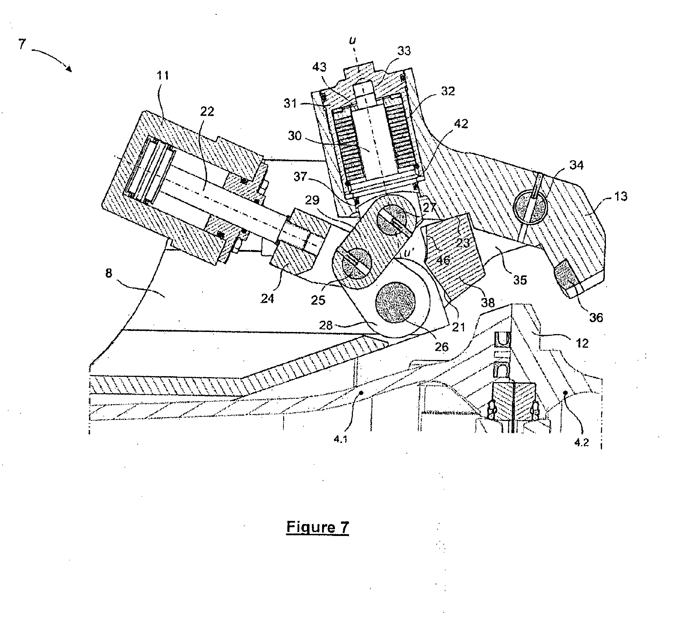

Les Figures 7, 8 et 9 sont des vues en coupe d'un module de serrage 7 suivant son plan de symétrie.

La Figure 7 correspond à la position ouverte d'un module de serrage 7. Cette position permet la connexion ou la déconnexion de service du connecteur-déconnecteur 4 en rendant possible le rapprochement ou l'éloignement de la bride 12 de l'embout 4.2 par rapport à l'embout 4.1, réalisé de manière coaxiale grâce au système de guidage (non représenté) du connecteur-déconnecteur 4.

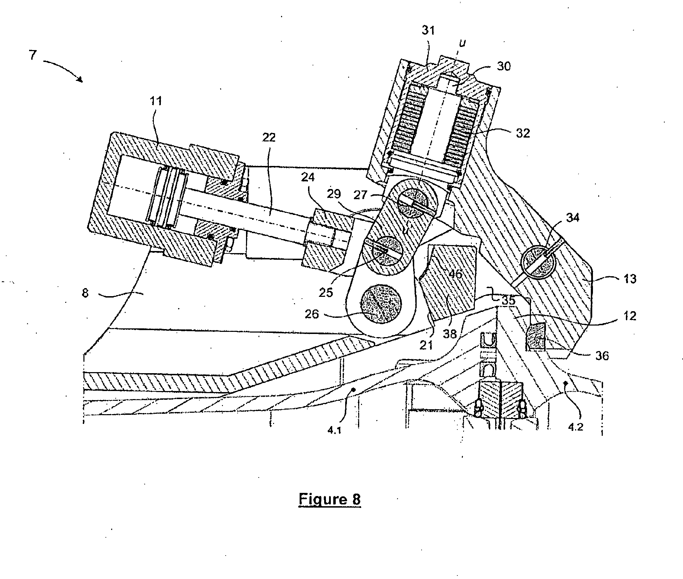

La fermeture d'un module de serrage 7 est initiée par la sortie du piston 22 du vérin 11, qui entraîne le déplacement de l'axe 25, par l'intermédiaire de la chape 24, de manière à ce que celui-ci tende à s'intercaler entre les axes 26 et 27, grâce au maintien en position haute de l'axe 27 permis par le contact entre les grands galets 45, fixés à son extrémité, et la partie supérieure des bielles latérales 35, ce qui provoque également le déplacement vers le haut du poussoir 30 à l'intérieur de la mâchoire 13 et du capot 31, entraînant la compression de la cartouche à ressorts 32. La forme des courbes 39 et 40 du support 8 en "U", avec lesquelles entrent en contact les petits galets 44, permet d'assurer le bon positionnement de l'axe 27. Lorsque la butée 38 entre en contact avec le support 8 en "U" au niveau de la face latérale 21, la position de l'axe 34 est figée. Ainsi, un déplacement supplémentaire du piston 11 provoque la remontée de l'axe 27, les petits galets 44 se situant au niveau des pentes 40 du support 8 en "U", ce qui entraîne la rotation dans le sens horaire de la mâchoire 13 autour de son axe 34 jusqu'à ce que ses patins 36 entrent en contact puis serrent la bride 12 de l'embout 4.2 contre l'embout 4.1. La Figure 8 représente ainsi le module de serrage 7 en position fermée.

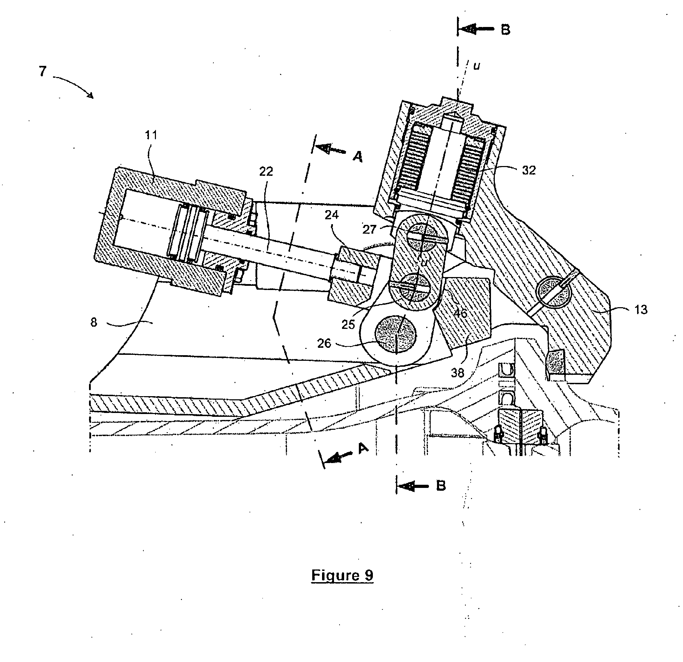

Une poursuite de la sortie du piston 22 du vérin 11 entraîne dans un premier temps l'alignement des axes 25, 26 et 27, la cartouche à ressorts 32 étant ainsi au maximum de sa compression, puis permet à l'axe 25 de passer à la droite du plan passant par les axes 26 et 27, jusqu'au contact de la chape 24 avec la face latérale 46 de la butée 38, comme présenté en Figure 9. La cartouche à ressorts 32 est ainsi légèrement décomprimée par rapport à sa précédente position, mais la force importante qu'elle exerce suivant (*uu*') en direction de *u*' permet de verrouiller mécaniquement la cinématique par arc-boutement, l'axe 25 ne pouvant plus se déplacer à gauche du plan passant par les axes 26 et 27 sans l'action du vérin 11, quels que soient les efforts repris par la mâchoire 13. Ainsi, durant un transfert de GNL, la position fermée et verrouillée des modules de serrage 7 est mécaniquement assurée, ce qui autorise, par mesure de sécurité, un défaut d'alimentation hydraulique au niveau du vérin 11.

La réouverture d'un module de serrage est donc initiée par la rentrée du piston 22 du vérin 11 qui provoque le dés-arc-boutement de la cinématique du système par le déplacement de l'axe 25 à la gauche du plan passant par les axes 26, 27, permis grâce au maintien en position de l'axe 27 par le contact des petits galets 44 fixés à son extrémité contre les courbes 40 du support 8 en "U". La poursuite de la rentrée du piston 22 entraîne, notamment par l'intermédiaire de la bielle centrale 29, le déplacement des petits galets 44 le long des courbes 40 puis 39 du support 8 en "U" et donc celui de l'axe 27. Cela permet la rotation dans le sens anti-horaire de la mâchoire 13 autour de l'axe 34 puis des bielles latérales 35 autour de l'axe 26, ce qui permet l'ouverture du module de serrage 7, qui est complète lorsque le piston 22 est totalement rentré, comme présenté en Figure 7. Toute influence de la gravité suivant la position de la mâchoire 13 sur l'embout 4.1 est maîtrisée d'une part par le contact des petits galets 44 avec les courbes 39 du support 8 en "U" qui l'empêchent de basculer vers le haut, et d'autre part par la butée 38 qui l'empêche de basculer vers le bas et la maintient ainsi en position ouverte.

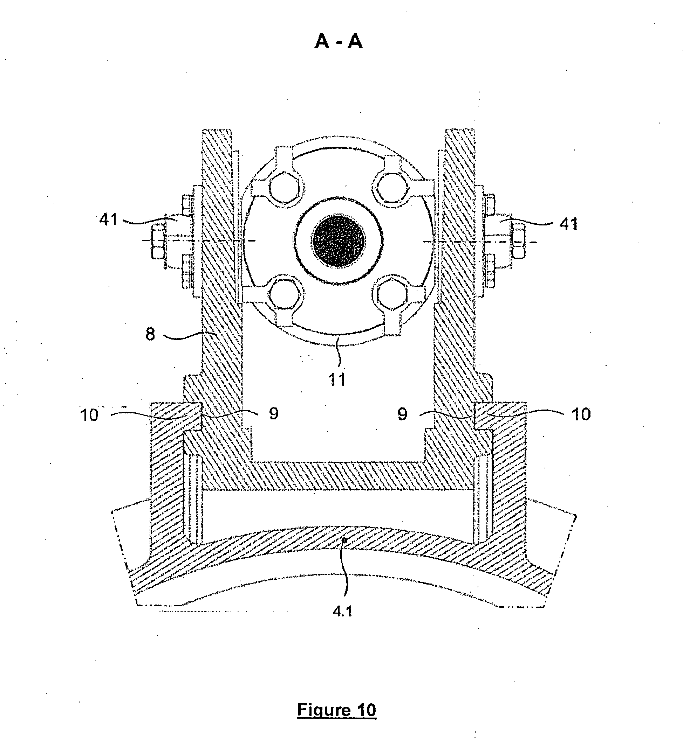

Comme présenté en Figure 10, qui est une vue en coupe suivant la ligne A-A de la Figure 9, chaque module de serrage 7 est entièrement intégré dans un support 8 en "U" pourvu d'une rainure 9 sur ses deux faces latérales qui lui permettent de coopérer avec les deux nervures 10 solidaires du corps de l'embout 4.1, ce qui permet à chaque module de serrage 7 de coulisser par rapport à l'embout 4.1.

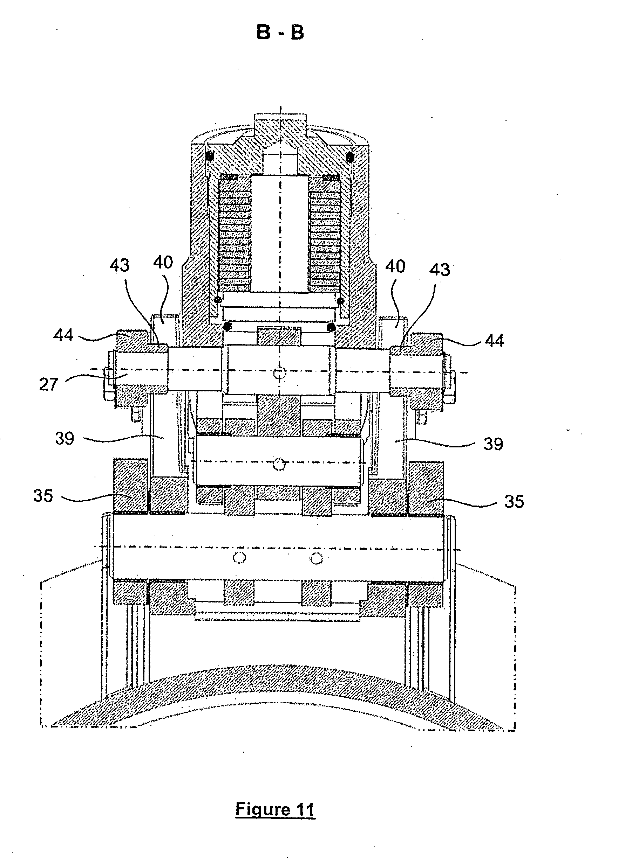

La Figure 11 est une vue en coupe suivant la ligne B-B de la Figure 9, qui permet de visualiser, notamment, les galets 44 et 45 et les pièces avec lesquelles ils entrent en contact.

## Revendications

1. Dispositif de connexion-déconnexion, comprenant un premier embout (4.1) et un flexible auquel un second embout (4.2) est relié, plusieurs modules (7) de serrage, chacun d'entre eux étant monté sur le premier embout (4.1) par un support et étant agencé pour, dans un mode de service, suivant un premier mouvement ayant une composante de rotation, venir s'appliquer, en fermeture de la connexion, derrière une bride (12) du second embout (4.2) et s'en écarter en ouverture de la connexion et chaque module (7) étant monté, dans un mode d'urgence, mobile, suivant un deuxième mouvement d'une position de retenue où il peut retenir les embouts (4.1, 4.2) l'un contre l'autre, en étant retenu par un dispositif (16) de retenue, à une position de dégagement où il ne le peut plus, **caractérisé en ce que** le deuxième mouvement est un mouvement de translation en bloc à la fois du module (7) et de son support, afin que les modules (7) de serrage s'écartent de plus en plus de l'axe (XX') commun des embouts (4.1, 4.2), lorsqu'ils se déplacent en translation en direction du second embout (4.2).

2. Dispositif suivant la revendication 1, **caractérisé en ce que** le dispositif de retenue comprend un collier (16) de serrage commun à tous les modules (7) serrant une bride (14) de chaque module (7) sur une bride (15) du premier embout (4.1).

3. Dispositif suivant l'une des revendications précédentes, **caractérisé en ce que** le deuxième mouvement est obtenu par la coopération d'une rainure (9) sur les deux faces latérales d'un module (7) avec les deux nervures (10) solidaires du premier embout (4.1) et inclinées par rapport à l'axe du premier embout (4.1), ce mouvement étant généré par le propre poids du flexible (3.1) ou (3.2), mouvement rendu possible par l'inclinaison importante par rapport à l'horizontale de l'axe du connecteur-déconnecter (4), le premier embout (4.1) étant plus haut que le deuxième embout (4.2) et les deux embouts se séparant de manière coaxiale.

4. Dispositif suivant l'une des revendications précédentes, **caractérisé par** un premier robinet (5.1) à papillon monté à l'extrémité du premier embout (4.1) tournée vers le second embout (4.2), un deuxième robinet (5.2) à papillon monté à l'extrémité du second embout (4.2) tourné vers le premier embout (4.1) et un troisième robinet (5.3) à papillon monté à l'extrémité du second embout (4.2) éloignée du premier embout (4.1).

5. Utilisation d'un dispositif de connexion-déconnexion (4) suivant l'une des revendications précédentes dans une installation de transfert de fluide par flexible aérien (3.1) ou flottant (3.2) entre deux bâtiments (1, 2), dont l'un de navigation (1).

## Patentansprüche

1. Verbindungs-/Trennvorrichtung, umfassend ein erstes Anschlussstück (4.1) und einen Schlauch, mit dem ein zweites Anschlussstück (4.2) verbunden ist, mehrere Klemmmodule (7), wobei ein jedes unter ihnen durch einen Halter an dem ersten Anschlussstück (4.1) angebracht ist und dazu eingerichtet ist, in einem Betriebsmodus, in einer eine Rotationskomponente aufweisenden ersten Bewegung, beim Schließen der Verbindung hinter einem Flansch (12) des zweiten Anschlussstücks (4.2) in Anlage zu kommen und sich beim Öffnen der Verbindung davon zu entfernen, und wobei jedes Modul (7) in einem Notfallmodus, in einer zweiten Bewegung, von einer Halteposition, in der es - durch eine Haltevorrichtung (16) gehalten - die Anschlussstücke (4.1, 4.2) gegeneinander halten kann, in eine Freigabeposition, in der es dies nicht mehr kann, beweglich angebracht ist, **dadurch gekennzeichnet, dass** die zweite Bewegung eine Verschiebebewegung im Ganzen gleichzeitig des Moduls (7) und seines Halters ist, damit die Klemmmodule (7) sich von der gemeinsamen Achse (XX') der Anschlussstücke (4.1, 4.2) mehr und mehr entfernen, wenn sie sich in Richtung des zweiten Anschlussstücks (4.2) verschiebend bewegen.

2. Vorrichtung nach Anspruch 1, **dadurch gekennzeichnet, dass** die Haltevorrichtung eine allen Modulen (7) gemeine Klemmschelle (16) umfasst, die einen Flansch (14) eines jeden Moduls (7) an einem Flansch (15) des ersten Anschlussstücks (4.1) festklemmt.

3. Vorrichtung nach einem der vorhergehenden Ansprüche, **dadurch gekennzeichnet, dass** die zweite Bewegung durch das Zusammenwirken einer Nut (9) an den beiden Seitenflächen eines Moduls (7) mit den beiden Rippen (10), die mit dem ersten Anschlussstück (4.1) fest verbunden und gegenüber der Achse des ersten Anschlussstücks (4.1) geneigt sind, erreicht wird, wobei diese Bewegung durch das Eigengewicht des Schlauchs (3.1) oder (3.2) erzeugt wird, Bewegung, die durch die erhebliche Neigung der Achse der Verbindungs-/Trennvorrichtung (4) gegenüber der Horizontalen ermöglicht wird, wobei das erste Anschlussstück (4.1) weiter oben als das zweite Anschlussstück (4.2) ist und die beiden Anschlussstücke sich koaxial trennen.

4. Vorrichtung nach einem der vorhergehenden Ansprüche, **gekennzeichnet durch** ein erstes Drosselklappenventil (5.1), das an dem dem zweiten Anschlussstück (4.2) zugewandten Ende des ersten Anschlussstücks (4.1) angebracht ist, ein zweites Drosselklappenventil (5.2), das an dem dem ersten Anschlussstück (4.1) zugewandten Ende des zweiten Anschlussstücks (4.2) angebracht ist, sowie ein drittes Drosselklappenventil (5.3), das an dem von dem ersten Anschlussstück (4.1) entfernten Ende des zweiten Anschlussstücks (4.2) angebracht ist.

5. Verwendung einer Verbindungs-/Trennvorrichtung (4) nach einem der vorhergehenden Ansprüche, in einer Anlage zum Fluidtransport mittels oberirdischem (3.1) oder schwimmendem (3.2) Schlauch zwischen zwei Strukturen (1, 2), davon eines für die Seefahrt (1).

## Claims

1. Connection-disconnection device, comprising a first end piece (4.1) and a second end piece (4.2) connected to a flexible pipeline, a plurality of clamping modules (7), each being mounted on the first end piece (4.1) by a support and being arranged, in operational mode, in a first movement with a rotation component, to be applied, on the closure of the connection, behind a flange (12) of the second end piece (4.2) and to move away on the opening of the connection, and each module (7) is mounted, in emergency mode, to be movable, in a second movement from a retaining position where it can hold the end pieces (4.1, 4.2) against one another, being held by a retaining device (16), to a disengaged position where it can no longer do this, **characterised in that** the second movement is a translation movement en bloc of the module (7) and its support removing them from the axis of the end pieces (4.1, 4.2) more and more in the direction of the second end piece (4.2).

2. Device according to claim 1, **characterised in that** the retaining device comprises a clamping collar (16) common to all of the modules (7) clamping a flange (14) of each module (7) on a flange (15) of the first end piece (4.1).

3. Device according to any one of the preceding claims, **characterised in that** the second movement is obtained by the cooperation of a groove (9) on the two lateral faces of a module (7) with the two ribs (10) which are joined to the first end piece (4.1) and inclined in relation to the axis of the first end piece (4.1), this movement being generated by the body weight of the flexible pipeline (3.1) or (3.2), said movement being made possible by the significant inclination relative to the horizontal of the axis of the connector- disconnector (4), the first end piece (4.1) being higher than the second end piece (4.2) and the two end pieces separating from one another in a coaxial manner.

4. Device according to any one of the preceding claims, **characterised by** a first butterfly valve (5.1) mounted at the end of the first end piece (4.1) turned towards the second end piece (4.2), a second butterfly valve (5.2) mounted at the end of the second end piece (4.2) turned towards the first end piece (4.1) and a third butterfly valve (5.3) mounted at the end of the second end piece (4.2) remote from the first end piece (4.1).

5. Use of a connection- disconnection device (4) according to any one of the preceding claims in an installation for transferring fluid through an aerial (3.1) or floating (3.2) flexible pipeline between two structures (1, 2), one of which is a navigation vessel (1).
